# EUROPEAN PATENT APPLICATION

(11) **EP 3 712 204 A1**
(43) Date of publication of application: **23.09.2020**
(21) Application number: 19163501.0
(22) Date of filing: 18.03.2019
(51) Int. Cl.: C08K 3/26, C08L 27/06, B32B 1/08, B32B 27/30, F16L 9/12

(54) **METAL HYDROXYCARBONATES FOR PIPES**

(71) Applicant: Baerlocher GmbH, 85716 Unterschleissheim (DE)
(72) Inventor: Chaigneau, Richard, 72000 Le Mans (FR)
(74) Representative: Mathys & Squire

(57) **Abstract**

The invention relates to polymer compositions comprising halogenated polymers with intumescent properties, polymer compositions comprising metal hydroxycarbonates as intumescent compounds and articles made from such polymer composition, which are especially useful for the use in indoor installations.

## Description

### BACKGROUND

The present invention relates to PVC compositions with intumescent properties. Such intumescent PVC-compositions are generally used for PVC applications which are to be employed in areas with high standards of fire safety. Intumescent and flame retardant compositions are commonly used in a variety of technical fields such as the formulation of paints, coatings and plastics, especially in the formulation mixtures of resin-based polymers which are formed by shaping techniques such as extrusion.

As such they are especially useful for the preparation of materials for indoor use in buildings, such as pipes, which can consist of only one PVC-layer or of more than one layer, one or more of which can be a PVC layer.

There are different categories of PVC, including rigid PVC (also known as "unplasticized PVC " and "PVC-U") which is a PVC in which no plasticizer has been added to soften it and which thus presents a rigidity characterized by a Young modulus between about 2.14 GPa and about 4.14 GPa, said rigid PVC being well known to those skilled in the technical field of polymers.

In the polymer industry it is known to manufacture pipes, e.g., for the transport of aqueous liquids by extrusion of PVC, preferably rigid PVC. Indeed, rigid PVC exhibits mechanical and physical properties particularly advantageous and appropriate not only for use in the manufacture of pipes for transport of liquids, but also for evacuation of aqueous liquids such as sewage, inside of buildings.

While the use of polymers in buildings is under many aspects often a concern under fire safety considerations, such considerations do not only concern the use of polymeric materials such as PVC as parts of interior design or structural building elements, but also as a material for pipes which are used for the transport of gases or liquids within a building. Especially under a scenario where a fire breaks out in one room or area of a building, propagation of heat and toxic gases to other parts of the building by means of propagation through a pipe must be avoided. In such cases especially those pipes which extend vertically pose a significant threat, as they tend to distribute heat much quicker than horizontally extending pipes due to a chimney effect, thus aiding the propagation of toxic gases and heat throughout a building.

In order to prevent heat and gases from propagation through polymeric pipes, especially through PVC pipes, many different suggestions, regulations and specifications exist, which all are supposed to improve fire safety in areas where PVC pipes are to be used in buildings. An example for such specifications will be given below, taking France as an example.

The manufacture of PVC pipes is subject to different French regulations which detail the requirements to be fulfilled with regard to their behavior and fire resistance.

With regard to behavior and fire resistance of such PVC pipes, in particular intended to be installed in establishments receiving the public, the mark of quality NF513 - Fire safety - Pipes and PVC Fittings - PVC Films - Coated Textile Substrates (NF Me) specifies that products covered by these certification rules are PVC pipes and fittings for the exhaust application (DTU 60.33) of thickness greater than or equal to 3 mm minimum, the European fire rating of which is B-s3-d0 or superior, said fire classification corresponding to the "Single Burning Item" , also known by the acronym "SBI " is described in EN 13823. The SBI classification is based on performance levels relating to heat released over time, to the volume of fumes time and the ability to propagate the flame.

As a solution to prevent the propagation of flames, heat and fumes through PVC pipes, it has been established as a solution to provide the PVC materials used for the preparation of the pipes with intumescent properties by using intumescent compositions. Intumescent compositions are compositions which, under the effect of heat, expand and then produce a carbonaceous material (also known under the name "char"). The expansion and production of carbonaceous material generally should achieve at least a slowing down of the propagation of flames, heat and fumes, preferably such propagation should be essentially completely stopped. In order to achieve this goal, many pipes made of rigid PVC to be used as interior installations are supposed as a feature an expansion of their thickness of more than 800%, e.g., under the above mentioned NF513-conditions.

PVC pipes used in buildings can be constructed from a simple single layer with intumescent properties. However, it is also been shown to be useful to construct PVC pipes in layers, e.g., as pipes having two or three or even more layers. Since the PVC pipes used in buildings often have to fulfill specific tasks, such as evacuating sewage, it has proven to be advantageous if such pipes have certain physical strengths which often is achieved by providing the pipes with walls of a certain thickness. However, since this results in the necessity to use a high amount of PVC, it has been shown that pipes with a sufficient physical strength can be prepared with a layered PVC material, where one of the layers has a lower density than the other layer or layers, which is usually achieved by providing this layer as a foam. Such foams are usually prepared by adding a blowing agent to the PVC material used to prepare the layer, which then, under the conditions during extrusion, releases a gas, thus resulting in the desired foam. While such a foam layer still provides sufficiently strong physical properties, it significantly decreases the amount of material used for preparation of a pipe.

As can be easily perceived from the above, from a practical point of view a two layer construction has proven not to be of particular advantage, since it does not allow for a sufficient control of the foaming layer. Thus, most of the multilayer constructions generally have three layers or four layers, where in the latter case the fourth layer is generally only a decorative layer.

If, for example, such a PVC pipe has three layers, it is often manufactured by extrusion from two different formulations:
- A first formulation, called "skin formulation ", for the realization of the inner and outer layers of the PVC pipe. This first formulation is for the inner and outer layers of the finished product and often has a density of 1.37 or greater than 1.37.
- A second formulation for the realization of an intermediate layer of the PVC pipe.

This second formulation is generally used accordingly to the above mentioned process, i.e. by foaming this intermediate layer with a blowing agent during extrusion to form an intermediate layer which often has a lower density than 1.37 g/ccm

While the controlled expansion of the intermediate layer results in a reduced consumption of raw materials, the depletion of this layer from intumescent material results in a situation where the layer contains only little matter likely to expand naturally under the influence of heat, because gas bubbles were already formed during the extrusion manufacturing process within this intermediate layer. In addition, in the finished three layer product the partially expanded intermediate generally has a thickness of 60% to 80% of the total thickness of the three layers of the product. In other words, when considering the use of the material according to the invention for the manufacture of pipes, the intumescent properties of a three-layer PVC pipe are already limited by the fact that it has an intermediate layer of relatively large thickness and whose expansion is already at an advanced stage.

The difficulties described here for a three layered pipe of course also apply for pipes made of two layers or even made of only one layer comprising the intumescent material

Thus, it is easy to understand the difficulty of developing PVC materials, especially PVC pipes which can reconcile parameters which, in view of what has been described above, are antagonistic, namely:
- intumescent properties in accordance with fire regulations in many countries, e.g., intumescence of at least 800%,
- a low production cost due to a low quantity of materials used for its manufacture, as well as a low density, preferably as low as possible, while still providing the required physical properties such as impact strength or rigidity.

Therefore, in view of these difficulties in the development of PVC-pipes, especially three-layer rigid PVC pipes which are also intumescent, and in this context of permanent evolution of regulatory aspects in the fire safety of PVC pipes to be used in buildings, the inventors seek to optimize the formulation of the mixtures of resins of PVC, in order to improve their intumescent properties and thus meet regulatory safety requirements required for these products in many countries.

This optimization of the formulation lies particularly in the development of additives whose incorporation into the PVC formulation will have the effect of enhancing the intumescent properties of the PVC composition, without compromising the mechanical properties of PVC pipes made from such compositions, especially of PVC pipes made of rigid PVC which have three layers.

Various additives have been known which have been incorporated in PVC formulations intended for the manufacturing rigid PVC.

US Pat. No. 4,965,309 describes smoke suppressant additives which are incorporated in a plastic material intended to be extruded, in particular in rigid PVC, so as to reduce the development of flames and fumes, and this without significantly affecting the appearance and properties of this polymer. The smoke suppressant additives described in this US patent include inorganic compounds based on zinc, magnesium and molybdenum.

EP 0 587 104 A2 discloses a rigid PVC composition which comprises a molybdenum compound, preferably a melamine molybdate, which is used as a smoke retarding agent. However, the addition of this smoke retardant agent has a negative impact, because it adversely influences the viscosity of the composition and therefore creates a less comfortable industrial shaping.

FR3022607B1 discloses a three layer rigid PVC pipe with a melamine derivative as an intumescent material.

Generally, the PVC pipes with intumescent properties made from compositions according to the present invention can be made of a single layer of PVC or from multiple layers, wherein not all of the layers constituting the item must have intumescent properties. In case of PVC pipes a pipe can be made from a single intumescent layer of PVC, but in many cases it can be advantageous, e.g., in view of physical or chemical properties, to have more than one layer, e.g. two or three layers, wherein only one of the layers, or in case of more than two layers, two or more of the layers have the intumescent properties conferred by using a material according to the invention. In the broadest sense, the invention thus relates to a composition comprising a polyvinyl chloride or a mixture of two or more polyvinyl chlorides and an intumescent compound, i.e., a compound which, under the effect of heat, expands and transforms the composition into a carbonaceous material which has a high heat resistance and is able to slow down or even completely stop the propagation of flames, wherein the intumescent compound is a metal hydroxycarbonate.

Specifically, the present invention concerns a polymer composition comprising a halogenated polymer and a metal hydroxycarbonate with a decomposition temperature of more than 250°C as an intumescent compound.

A further subject of the present invention is a polymer pipe comprising at least one layer of PVC, wherein the PVC-layer comprises a metal hydroxycarbonate with a decomposition temperature of more than 250°C as an intumescent compound, or a mixture of two or more thereof.

A further subject of the invention is a process for manufacturing a polymer pipe with at least one rigid PVC-layer, comprising the steps:
a) preparing a dryblend comprising at least PVC and a metal hydroxycarbonate and
b) extruding the mixture obtained in step a) through a die to obtain a halogenated polymer pipe.

A further subject of the invention is a stabilizer composition comprising an acid scavenger (e.g. Zeolithe, Hydrotalcite or Hydroxides), a lubricant such as a hydrocarbon wax or a metal stearate and a metal hydroxycarbonate as an intumescent material with a decomposition temperature of more than 250°C.

The inventors of the present invention have found that PVC pipes according to the invention not only provide good mechanical and physical properties which conform to many product standards for PVC pipes in many countries, but that also such PVC pipes have an average expansion ratio of 800%, preferably at least 850%, more preferred of at least 900% or at least 950% or at least 1000%. Compositions according to the invention can provide PVC articles which have an average expansion ratio of at least 1050% or at least 1100% or even more, such as an average expansion ratio of at least 1200% or at least 1250% at least 1300% or at least 1350% or at least 1400% or at least 1450%.

Also, the PVC pipes according to the invention can be perfectly used in the applications mentioned in these standards concerning PVC pipes.

All amounts of additives or components given in the text are given relative to the weight of the PVC resin in phr (per hundred resin) if not specified otherwise. Percentages relating to amounts of compounds are given as % by weight, if not specifically specified otherwise. Molecular weights are specified as weight molecular weights (M_{w}) as measured with GPC.

Preferably, the metal hydroxycarbonate is selected from Magnesium hydroxycarbonate (Artinit Mg₂(CO₃)(OH)₂·3H₂O), zinc hydroxycarbonate (Hydrozinkit Zn₅(CO₃)₂(OH)₆, Parádsasvárit Zn₂(CO₃)(OH)₂), aluminium hydroxycarbonate (Hydroscarbroit Al₁₄(CO₃)₃(OH)₃₆·nH₂O, Scarbroit Al₅(OH)₁₃(CO₃)·5H₂O), manganese hydroxycarbonate (Holdawayit Mn₆²⁺(CO₃)₂(OH)₈.

In a very advantageous way, the metal hydroxycarbonate is zinc hydroxycarbonate. In this embodiment of the invention the decomposition gases resulting from the degradation of the hydroxycarbonate are responsible for expansion of the pipe submitted to the heat of a fire. The expanded matter is forming a barrier against further propagation of flames, heat, and fumes.

A metal hydroxycarbonate is therefore present in at least one of the layers of a PVC pipe according to the invention.

In one embodiment of the invention, a metal hydroxycarbonate is present in all layers of a PVC pipe according to the invention.

In a preferred embodiment of the invention, the hydroxy carbonate is present in a particulate state, and preferably has a particle size of between 2 µm and 100 µm, more preferably between 2 µm and 25 µm. Particle sizes are measured by conventional methods like sieve analysis or laser diffraction methods.

A particle size of more than 100 µm can have the following drawbacks on PVC pipes:
- a granular surface appearance of the pipe (the hydroxycarbonate grains could be visible), and especially
- the creation of structural heterogeneity in the pipe structure, possibly resulting in deterioration of mechanical stability, as well as
- the risk of inhomogeneous intumescence of the pipe, due to a heterogeneous volume distribution of hydroxycarbonate in the PVC resin or resins at the time of preparation of the masterbatch.

In a polymer composition according to the present invention, the halogenated polymer is preferably a PVC or CPVC.

Advantageously, the polymer composition according to the invention comprises at least one PVC resin with a k-value of between 56 and 68, preferably between 57 and 67.

The polymer composition may comprise recycled PVC materials from the sorting of consumer goods such as PVC joinery (window, shutter, door) and PVC pipes, or other products equivalents to these materials.

In one embodiment of the invention, the polymer composition which can be used to obtain PVC pipes comprises, per 100.00 parts of PVC resin, at least 0.25 parts of metal hydroxycarbonate.

Preferably, the polymer composition includes, for 100,00 parts PVC resin, 0.25 parts to 5.00 parts, preferably 0.40 parts to 2.00 parts of metal hydroxycarbonate (all parts by weight).

The invention also relates to a polymer pipe comprising at least one layer of PVC, wherein the PVC-layer comprises a metal hydroxycarbonate with a decomposition temperature of more than 250°C as an intumescent compound, or a mixture of two or more thereof.

Preferably, the polymer pipe comprises an inner layer, a middle layer and an outer layer, wherein one or more of the layers is a PVC-layer and comprises a metal hydroxycarbonate with a decomposition temperature of more than 250°C as an intumescent compound, or a mixture of two or more thereof.

According to another embodiment of the invention, the middle layer has a lower density than the inner layer or the outer layer or both.

In one embodiment of the invention, the PVC pipe comprises:
- an inner layer (also called " inner skin") and an outer layer (also called " outer skin");
- an intermediate layer (also called "foam"), preferably
- an expanded intermediate layer (and then also called " expanded foam"), disposed between the inner layer and the outer layer. Preferably, at least one of the three layers of said pipe is being formed from a rigid PVC composition comprising at least one metal hydroxycarbonate.

In one embodiment of the invention, the inner layer, the intermediate layer and the outer layer are formed from a rigid PVC composition comprising at least a metal hydroxycarbonate.

Optionally, said intermediate layer further comprises recycled PVC.

The inventors of the present invention have found that such a PVC pipe with one, two or three layers has improved properties of resistance to fire when compared with a PVC pipe which has equivalent layers but which is devoid of metal hydroxycarbonate.

It has further proven to be advantageous if in a polymer pipe according to the invention the middle layer is a foamed PVC layer. To achieve a foamed intermediate layer the PVC dryblend used for extrusion of the pipe intermediate layer comprises a blowing agent, preferably but not limited to Azodicarbonamide (ADCA).

Preferably, when the intermediate layer is an expanded layer, the mass of the intermediate layer is between about 50% and about 80% of the weight of the polymer pipe.

Generally, a polymer pipe according to the invention can comprise for 100.00 parts of PVC resin, 0.25 phr to 5.00 phr, preferably from 0.40 phr to 2.00 phr of a metal hydroxycarbonate.

Preferentially, a pipe according to the invention has a diameter of between 30.0 mm and 320.0 mm, preferably between 32.0 mm and 315.0 mm. The minimum overall thickness of the wall of a pipe according to the invention is in the range of from 3.0 mm to 6.5 mm, preferably between 3.0 mm and 6.2 mm. The thickness of the inner layer is at least 0.2 mm.

A three-layer rigid PVC pipe has the further advantage that the layers can have different mechanical characteristics to each other. For this purpose, the formulations of the compositions constituting the different layers can be adjusted according to the desired mechanical properties for each of these layers.

As explained above, the different layers of PVC according to the invention can comprise virgin PVC resin materials (or other said materials used for the first time) or recycled PVC (or any recycled material based on PVC) or both.

The PVC composition may further comprise further components such as at least one stabilizer or a stabilizer composition, lubricants, fillers, pigments, processing aids, etc., as known to a person skilled it in the art.

For the purposes of the present invention, a "stabilizer composition" is a stabilizer composition which can be used for the stabilization of halogen-containing polymers. To achieve this stabilizing effect, a stabilizer composition is generally mixed with a halogen-containing polymer intended for stabilization, and then processed. However, it is equally possible that a stabilizer composition is admixed, during processing, with the halogen-containing polymer to be stabilized.

The present invention therefore also relates in general to a stabilizer composition which comprises a metal hydroxycarbonate and further additives which are useful as additives in halogenated polymer compositions and especially the dryblends prepared in preparation of extrusion of such polymer compositions, specifically to a stabilizer composition comprising an acid scavenger, a lubricant and a metal hydroxycarbonate as an intumescent compound with a decomposition temperature of more than 250°C.

Examples of other suitable additives are epoxy compounds. Examples of these epoxy compounds are epoxidized soya oil, epoxidized olive oil, epoxidized linseed oil, epoxidized castor oil, epoxidized peanut oil, epoxidized maize oil, epoxidized cottonseed oil, and also glycidyl compounds.

Glycidyl compounds contain a glycidyl group directly bonded to a carbon atom, oxygen atom, nitrogen atom, or sulfur atom. Glycidyl esters or methylglycidyl esters are obtainable via reaction of a compound having at least one carboxy group in the molecule and epichlorohydrin or glycerol dichlorohydrin, or methylepichlorohydrin. The reaction advantageously takes place in the presence of bases.

WO 02/068526 A1 contains further details with respect to glycidyl compounds suitable for the invention, on page 20, line 22 to page 21, line 19. That publication, and in particular the passage quoted here, is expressly incorporated herein by way of reference and is regarded as part of the disclosure of the present text.

Examples of further terminal epoxides suitable as additives for the purposes of the present invention are glycidyl-1-naphthylether, glycidyl-2-phenylphenylether, 2-diphenylglycidylether, N-(2,3-epoxypropyl)phthalimide, and 2,3-epoxypropyl-4-methoxyphenylether.

N-Glycidyl compounds are equally suitable, for example those obtainable via dehydrochlorination of the reaction products of epichlorohydrin with amines which contain at least one amino hydrogen atom. Examples of these amines are aniline, N-methylaniline, toluidine, n-butylamine, bis(4-aminophenyl)methane, m-xylylenediamine, or bis(4-methylaminophenyl)methane.

S-Glycidyl compounds are equally suitable, examples being di-S-glycidyl ether derivatives which derive from dithiols, such as ethane-1,2-dithiol or bis(4-mercaptomethylphenyl) ether.

Particularly suitable epoxy compounds are described by way of example on pages 3 to 5 of EP-A 1 046 668.

Other suitable additives for the purposes of the present invention are 1,3-dicarbonyl compounds, in particular the β-diketones and β-ketoesters. For the purposes of the present invention, suitable dicarbonyl compounds are those of the general formula R'C(O)CHR"-C(O)R"', examples of these being those described on page 5 of EP-1 046 668, which is expressly incorporated herein by way of reference, particularly with regard to the moieties R', R", and R*'"*, and the disclosure of which is considered to be part of the disclosure of the present text. Examples of particularly suitable compounds here are acetylacetone, butanoylacetone, heptanoylacetone, stearoylacetone, palmitoylacetone, lauroylacetone, 7-tert-nonylthioheptane-2,4-dione, benzoylacetone, dibenzoylmethane, lauroylbenzoylmethane, palmitoylbenzoylmethane, stearoylbenzoylmethane, isooctylbenzoylmethane, 5-hydroxycapronylbenzoylmethane, tribenzoylmethane, bis(4-methylbenzoyl)methane, benzoyl-p-chlorobenzoylmethane, bis(2-hydroxybenzoyl)methane, 4-methoxybenzoylbenzoylmethane bis(4-methoxybenzoyl)methane, benzoylformylmethane, benzoylacetylphenylmethane, 1-benzoyl-1-acetylnonane, stearoyl-4-methoxybenzoylmethane, bis(4-tert-butylbenzoyl)methane, benzoylphenylacetylmethane, bis(cyclohexanoyl)methane, dipivaloylmethane, 2-acetylcyclopentanone, 2-benzoylcyclopentanone, the methyl, ethyl, butyl, 2-ethylhexyl, dodecyl, or octadecyl esters of diacetoacetic acid, and also propionyl- or butyrylacetic acid esters having from 1 to 18 C atoms, and also the ethyl, propyl, butyl, hexyl, or octyl ester of stearoylacetic acid, or polynuclear β-ketoesters as described in EP-A 433 230, these being expressly incorporated herein by way of reference, or dehydroacetic acid, and also its zinc, magnesium, or alkali metal salts, or the alkali metal, alkaline earth metal, or zinc chelates of the compounds mentioned, to the extent that these exist.

The amount of 1,3-diketo compounds present in an inventive stabilizer composition can be up to about 20% by weight, for example up to about 10% by weight.

Polyols are other additives suitable for the purposes of the inventive stabilizer compositions. Examples of suitable polyols are pentaerythritol, dipentaerythritol, tripentaerythritol, bistrimethylolpropane, inositol, polyvinyl alcohol, bistrimethylolethane, trimethylolpropane, sorbitol, maltitol, isomaltitol, lactitol, lycasine, mannitol, lactose, leucrose, tris(hydroxyethyl) isocyanurate, palatinitol, tetramethylolcyclohexanol, tetramethylolcyclopentanol, tetramethylolcycloheptanol, glycerol, diglycerol, polyglycerol, thiodiglycerol, or 1-0-α-D-glyco-pyranosyl-D-mannitol dihydrate.

The amount present of the polyols suitable as additives in an inventive stabilizer composition can be up to about 30% by weight, for example up to about 10% by weight.

Examples of equally suitable additives are sterically hindered amines such as those mentioned on pages 7 to 27 of EP-A 1 046 668.

The amount present of the sterically hindered amines suitable as additives in an inventive stabilizer composition can be up to about 30% by weight, for example up to about 10% by weight.

Other suitable additives in the inventive stabilizer compositions are hydrotalcites, zeolites, and alkali metal aluminocarbonates. Suitable hydrotalcites, zeolites, and alkali metal aluminocarbonates are described by way of example on pages 27 to 29 of EP-A 1 046 668, on pages 3, 5, and 7 of EP-A 256 872, on pages 2 and 3 of DE-C 41 06 411, or on pages 2 and 3 of DE-C 41 06 404.

The amounts present of the hydrotalcites, zeolites, and alkali metal aluminocarbonates suitable as additives in an inventive stabilizer composition can be up to about 50% by weight, for example up to about 30% by weight.

Examples of equally suitable additives for the purposes of the inventive stabilizer compositions are hydrocalumites of the general formula I

m²⁺₍₂₊ₓ₎Al³⁺_{(1+y)}(OH)_{(6+z)}A^{k-}ₐ[Bₙ]^{nl}_{b}*mH₂O (I),

in which M is calcium, magnesium, or zinc, or a mixture composed of two or more thereof, A is a k-valent inorganic or organic acid anion, k is 1, 2, or 3, B is an inorganic or organic acid anion different from A, n is a whole number ≥ 1, and, to the extent that n > 1, gives the degree of polymerization of the acid anion, and 1 is 1, 2, 3, or 4, and gives the valency of the acid anion, where if n = 1, 1 is 2, 3 or 4, and if n > 1, 1 gives the valency of the individual monomer units of the polyanion, and is 1, 2, 3, or 4, and nl gives the total valency of the polyanion, and the following rules apply to the parameters x, y, a, b, n, z, and k:
0 ≤ x < 0.6,
0 ≤ y < 0.4, where either x = 0 or y = 0,
0 < a < 0.8/n, and
z = 1 + 2x + 3y - ka - n/b.

For the purposes of one preferred embodiment of the present invention, the additives used comprise compounds of the general formula I in which M is calcium, which can, if appropriate, be present in a mixture with magnesium or zinc, or magnesium and zinc.

With respect to hydrocalumites that can be used for the invention, WO 02/068526 A1 contains further examples, and also indications of their preparation, on page 24, line 21 to page 26, line 12.
For the purposes of the above mentioned stabilizer compositions, an amount of up to about 50% by weight, for example up to about 30% by weight or up to about 15% by weight, can be used of compounds of the general formula I.

For the purposes of another embodiment of the present invention, a stabilizer composition can comprise at least one basic calcium salt. Examples of suitable basic calcium salts are calcium oxide, calcium carbonate, or calcium hydroxide. The basic calcium salts can be surface-modified, if appropriate.

Further suitable constituents of stabilizer compositions useful in the present invention are metal oxides, metal hydroxides, and metal soaps of saturated, unsaturated, straight-chain or branched, aromatic, cycloaliphatic, or aliphatic carboxylic acids or hydroxycarboxylic acids preferably having from about 2 to about 22 C atoms.

The metal cations of the metal oxides, metal hydroxides, or metal soaps suitable as additives have preferably a divalent cation, and the cations of calcium or zinc or magnesium, or a mixture composed of two or more thereof, are particularly suitable, but for the purposes of one preferred embodiment of the present invention, the inventive stabilizer compositions are zinc-free.

Examples of suitable carboxylic acid anions encompass anions of monovalent carboxylic acids, such as acetic acid, propionic acid, butyric acid, valeric acid, hexanoic acid, enanthic acid, octanoic acid, neodecanoic acid, 2-ethylhexanoic acid, pelargonic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl-4-hydroxybenzoic acid, toluic acid, dimethylbenzoic acid, ethylbenzoic acid, n-propylbenzoic acid, salicylic acid, p-tert-octylsalicylic acid, sorbic acid, anions of divalent carboxylic acids and, respectively, of their monoesters, e.g. oxalic acid, malonic acid, maleic acid, tartaric acid, cinnamic acid, mandelic acid, malic acid, glycolic acid, oxalic acid, salicylic acid, polyglycoldicarboxylic acids whose degree of polymerization is from about 10 to about 12, phthalic acid, isophthalic acid, terephthalic acid, or hydroxyphthalic acid, anions or tri- or tetravalent carboxylic acids and, respectively, of their mono-, di-, or triesters, e.g. hemimellitic acid, trimellitic acid, pyromellitic acid, or citric acid, and also "superbasic" carboxylates as described by way of example in DE-A 41 06 404 or in DE-A 40 02 988.

For the purposes of one preferred embodiment of the present invention, the additives used comprise metal soaps whose anions derive from saturated or unsaturated carboxylic acids or hydroxycarboxylic acids having from about 8 to about 20 C atoms. Particular preference is given here to stearates, oleates, laurates, palmitates, behenates, versatates, hydroxystearates, dihydroxystearates, p-tert-butylbenzoates, or (iso)octanoates of calcium or zinc, or a mixture composed of two or more thereof. For the purposes of another preferred embodiment of the present invention, an inventive stabilizer composition comprises calcium stearate or zinc stearate, or a mixture of these.

The amount of the metal oxides, metal hydroxides, or metal soaps mentioned, or of a mixture composed of two or more thereof, in an inventive stabilizer composition can be up to about 50% by weight, for example up to about 30% by weight.

A stabilizer composition of the present invention can further comprise, as heat stabilizer component, an organotin compound or a mixture composed of two or more organotin compounds. Examples of suitable organotin compounds are methyltin tris(isooctyl thioglycolate), methyltin tris(isooctyl 3-mercaptopropionate), methyltin tris(isodecyl thioglycolate), dimethyltin bis(isooctyl thioglycolate), dibutyltin bis(isooctyl thioglycolate), monobutyltin tris(isooctyl thioglycolate), dioctyltin bis(isooctyl thioglycolate), monooctyltin tris(isooctyl thioglycolate) or dimethyltin bis(2-ethylhexyl-β-mercaptopropionate).

For the purposes of the inventive stabilizer compositions, it is also possible to use the organotin compounds which are mentioned, and whose preparation is described, on pages 18 to 29 of EP-A 0 742 259.

The amount which can be present of the organotin compounds described in the inventive stabilizer composition is up to about 20% by weight, in particular up to about 10% by weight.

For the purposes of another embodiment of the present invention, a stabilizer composition can comprise organic phosphite esters having from 1 to 3 organic moieties which are identical, or two of which are identical, or which are different. Examples of suitable organic moieties are linear or branched, saturated or unsaturated alkyl moieties having from 1 to 24 C atoms, unsubstituted or substituted alkyl moieties having from 6 to 20 C atoms, or unsubstituted or substituted aralkyl moieties having from 7 to 20 C atoms. Examples of suitable organic phosphite esters are tris(nonylphenyl), trilauryl, tributyl, trioctyl, tridecyl, tridodecyl, triphenyl, octyl diphenyl, dioctyl phenyl, tri(octylphenyl), tribenzyl, butyl dicresyl, octyl di(octylphenyl), tris(2-ethylhexyl), tritolyl, tris(2-cyclohexylphenyl), tri-α-naphthyl, tris(phenylphenyl), tris(2-phenylethyl), tris-(dimethylphenyl), tricresyl, or tris(p-nonylphenyl)phosphite, or tristearyl sorbitol triphosphite, or any mixture composed of two or more of these.

The amount present of the phosphite compounds described in an inventive stabilizer composition can be up to about 30% by weight, in particular up to about 10% by weight, based on the entire stabilizer composition.

Further additives that can be present in a stabilizer composition useful according to the present invention are the capped mercaptans described on pages 4 to 18 of EP-A 0 742 259.

The amount present of the capped mercaptan described in an inventive stabilizer composition can be up to about 30% by weight, in particular up to about 10% by weight, based on the entire stabilizer composition.

Pigments are equally suitable as constituents of the stabilizer compositions. Examples of suitable inorganic pigments are titanium dioxide, carbon black, Fe₂O₃, Sb₂O₃, (Ba, Sb)O₂, Cr₂O₃, spinells, such as cobalt blue and cobalt green, Cd (S, Se), or ultramarine blue. Examples of suitable organic pigments are azo pigments, phthalocyanine pigments, quinacridone pigments, perylene pigments, diketopyrrolopyrrole pigments, and anthraquinone pigments.

A stabilizer composition useful according to the present invention can also comprise the fillers described in "Handbook of PVC Formulating", E.J. Wickson, John Wiley & Sons, Inc., 1993, pages 393-449, or the reinforcing agents described in "Taschenbuch der Kunststoffadditive" [Plastics additives handbook], R. Gächter and H. Müller, Carl Hanser Verlag, 1990, pages 549-615. Examples of particularly suitable fillers or reinforcing agents are calcium carbonate (chalk), dolomite, wollastonite, magnesium oxide, magnesium hydroxide, silicate, glass fibers, talc, kaolin, carbon black, or graphite, woodflour, or other renewable raw materials. For the purposes of one preferred embodiment of the present invention, a stabilizer composition useful according to the present invention comprises chalk.

For the purposes of another embodiment of the present invention, the inventive stabilizer compositions can comprise antioxidants, UV absorbers, and light stabilizers, or further blowing agents. Examples of suitable antioxidants are described on pages 33 to 35 of EP-A 1 046 668.

Pages 35 and 36 of EP-A 1 046 668 mention suitable UV absorbers and light stabilizers.

Examples of suitable further blowing agents are organic azo and hydrazo compounds, tetrazoles, oxazines, isatoic anhydride, salts of citric acid, such as ammonium citrate, and also soda and sodium bicarbonate. Examples of particularly suitable compounds are ammonium citrate, azodicarbonamide, or sodium bicarbonate, or a mixture composed of two or more thereof.

A stabilizer composition useful according to the present invention can also comprise impact modifiers and processing aids, gelling agents, antistatics, biocides, metal deactivators, optical brighteners, flame retardants, and antifogging compounds. Suitable compounds of these classes of compound are described by way of example in "Kunststoff Additive" [Plastics additives], R. Keßler and H. Müller, Carl Henser Verlag, 3rd edition, 1989, and in "Handbook of PVC Formulating", E.J. Wilson, J. Wiley & Sons, 1993.

Other additives suitable for the present invention are inorganic or organic solvents and mixtures of these. Examples of solvents suitable for the invention are polar organic solvents. Polar organic solvents suitable for the invention are any of the solvents whose molecules have an electrical dipole moment, examples being polar organic solvents having electronegative heteroatoms, such as O, S, N, P, F, Cl, or Br.

Examples of polar organic solvents that can be used are polyols. For the purposes of the present invention, the term "polyols" denotes organic compounds which have two or more OH groups per molecule. Examples of suitable polyols are pentaerythritol, dipentaerythritol, tripentaerythritol, bistrimethylolpropane, inositol, polyvinyl alcohol, bistrimethylolethane, trimethylolpropane, sorbitol, maltitol, isomaltitol, lactitol, Lycasin, mannitol, lactose, leucrose, tri(hydroxyethyl) isocyanurate, palatinitol, tetramethylolcyclohexanol, tetramethylolcyclopentanol, tetramethylolcycloheptanol, glycerol, diglycerol, polyglycerol, thiodiglycerol or 1-0-α-D-glycopyranosyl-D-mannitol dihydrate.

Aliphatic amino alcohols are equally suitable as polar organic solvent, examples being amino monoalcohols or amino polyols having from 2 to about 40 C atoms, preferably from 2 to about 20 C atoms, examples being ethanolamine, diethanolamine, triethanolamine, triisopropanolamine, tri-n-propanolamine, tributanolamine, tripentanolamine, 1-amino-3,3-dimethylpentan-5-ol, 2-aminohexane-2',2"-diethanolamine, 1-amino-2,5-dimethylcyclohexan-4-ol, 2-aminopropanol, 2-aminobutanol, 3-aminopropanol, 1-amino-2-propanol, 2-amino-2-methyl-1-propanol, 5-aminopentanol, 3-aminomethyl-3,5,5-trimethylcyclohexanol, 1-amino-1-cyclopentanemethanol, 2-amino-2-ethyl-1,3-propanediol, 2-(dimethylaminoethoxy)ethanol, aromatic-aliphatic or aromatic-cycloaliphatic amino alcohols having from 6 to about 20 C atoms, where heterocyclic or isocyclic ring systems are used as aromatic structures, examples being naphthalene derivatives or in particular benzene derivatives, such as 2-aminobenzyl alcohol, 3-(hydroxymethyl)aniline, 2-amino-3-phenyl-1-propanol, 2-amino-1-phenylethanol, 2-phenylglycinol or 2-amino-1-phenyl-1,3-propanediol, and also mixtures composed of two or more of these compounds.

Examples of other suitable additives are amino alcohols. For the purposes of the present invention, suitable amino alcohols are in principle any of the compounds which have at least one OH group and one primary, secondary, or tertiary amino group, or a combination composed of two or more of the amino groups mentioned. For the purposes of the present invention, either solid or liquid amino alcohols are in principle suitable as constituent of the inventive stabilizer compositions.

Examples of amino alcohols suitable for the invention are monoamino-compound derivatives bearing OH groups and having from 2 to about 40, for example from 6 to about 20, C atoms, or derivatives of diamino compounds having from 2 to about 40, for example from 6 to 20, C atoms, or of triamino compounds having from 2 to about 40, for example from 6 to about 20, C atoms. Substituted amines having from 2 to about 20 C atoms can moreover be used for the invention, by way of example.

Monoamine derivatives bearing OH groups have by way of example a primary, a secondary, or a tertiary amino group. Examples of these monoamines are mono-, di-, or triethylamine, mono-, di-, or tri-n-propylamine, mono-, di-, or triisopropylamine, mono-, di-, or tri-sec-propylamine, mono-, di-, or tri-n-butylamine, mono-, di-, or tri-sec-butylamine, mono-, di-, or- tri-tert-butylamine, or mono-, di-, or trioctylamine, trimethylamine, N-methyl-, N-ethyl-, or N-cyclohexylmorpholine, dimethylcyclohexylamine, dimethylbenzylamine, 1-azabicyclo[3.3.0]octane. Examples of suitable diamine derivatives bearing OH groups are those based on diamines whose molar mass is from about 32 to 200 g/mol. Suitable diamine derivatives bearing OH groups have by way of example two primary, two secondary, or two tertiary, or one primary and one secondary, or one primary and one tertiary, or one secondary and one tertiary, amino compound. Examples of these are diaminoethane, the isomeric diaminopropanes, the isomeric diaminobutanes, the isomeric diaminohexanes, piperazine, 2,5-dimethylpiperazine, amino-3-aminomethyl-3,5,5-trimethylcyclohexane (isophorone diamine, IPDA), 4,4'-diaminodicyclohexylmethane, 1,4-diaminocyclohexane, aminoethylethanolamine, dimorpholinodiethyl ether, 1,4-diazabicyclo[2.2.2]octane, N,N,N',N' -tetramethylethylenediamine, N,N,N' ,N' - tetramethylbutanediamine, N,N,N' ,N' -tetramethyl-1,6-hexanediamine, tetramethyldiaminoethyl ether, 2-(N,N-dimethylamino)-1-aminoethane, di(4-N,N-dimethylaminocyclohexyl)methane, 1,2-dimethylimidazole, N,N'-dimethylpiperazine, hydrazine, hydrazine hydrate. Triamine derivatives bearing OH groups are likewise suitable. These triamines have by way of example three primary, three secondary, or three tertiary, or two primary and one secondary or one tertiary, or two secondary and one primary or tertiary, or two tertiary and one primary or secondary, amino groups. Examples of these are diethylenetriamine, 1,8-diamino-4-aminomethyloctane, pentamethyldiethylenetriamine. Bis(dimethylaminopropyl)urea is also suitable, by way of example.

Particularly suitable compounds are aliphatic amino alcohols having from 2 to about 40 C atoms, preferably from 6 to about 20 C atoms, examples being 1-amino-3,3-dimethylpentan-5-ol, 2-aminohexane-2',2"-diethanolamine, triethanolamine 1-amino-2,5-dimethylcyclohexan-4-ol, 2-aminopropanol, 2-aminobutanol, 3-aminopropanol, 1-amino-2-propanol, 2-amino-2-methyl-1-propanol, 5-aminopentanol, 3-aminomethyl-3,5,5-trimethylcyclohexanol, 1-amino-1-cyclopentanemethanol, 2-amino-2-ethyl-1,3-propanediol, 2-(dimethylaminoethoxy)ethanol, aromatic-aliphatic or aromatic-cycloaliphatic amino alcohols having from 6 to about 20 C atoms, where heterocyclic or isocyclic ring systems are used as aromatic structures, examples being naphthalene derivatives or in particular benzene derivatives, such as 2-aminobenzyl alcohol, 3-(hydroxymethyl)aniline, 2-amino-3-phenyl-1-propanol, 2-amino-1-phenylethanol, 2-phenylglycinol or 2-amino-1-phenyl-1,3-propanediol, and also mixtures composed of two or more of these compounds.

For the purposes of another embodiment of the present invention, the amino alcohols used comprise heterocyclic compounds which have a cyclic ring system having amino groups, where the bonding of the OH groups is either directly on the ring or preferably by way of spacers thereto.

Isocyanurates of the general formula VI containing hydroxyl groups are particularly preferred here 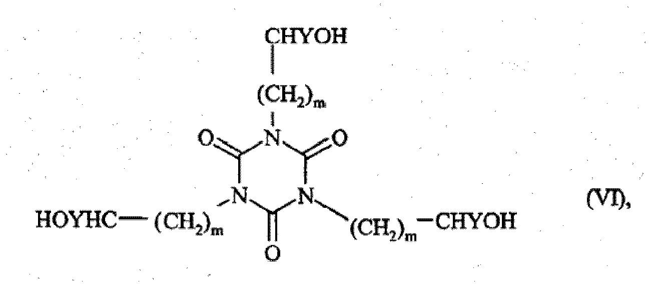 in which the groups Y and the indices m are in each case identical or different and m is a whole number from 0 to 20 and Y is a hydrogen atom or a linear or branched, saturated or unsaturated alkyl group having from 1 to about 10 C atoms. For the purposes of the present invention, particular preference is given to the use of tris(hydroxyethyl) isocyanurate (THEIC) as constituent of the inventive stabilizer compositions.

Equally suitable additives for the purposes of the present invention are compounds having a structural element of the general formula VII 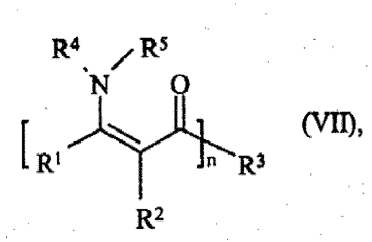 in which n is a number from 1 to 100,000, the moieties R¹, R², R⁴ and R⁵, each independently of the others, are hydrogen, or an unsubstituted or substituted linear or branched, saturated or unsaturated aliphatic alkyl moiety having from 1 to 44 C atoms, or an unsubstituted or substituted saturated or unsaturated cycloalkyl moiety having from 6 to 44 C atoms, or an unsubstituted or substituted aryl moiety having from 6 to 44 C atoms, or an unsubstituted or substituted aralkyl moiety having from 7 to 44 C atoms, or the moiety R¹ is an unsubstituted or substituted acyl moiety having from 2 to 44 C atoms, or the moieties R¹ and R² have bonding to give an aromatic or heterocyclic system, and in which the moiety R³ is hydrogen, an unsubstituted or substituted, linear or branched, saturated or unsaturated aliphatic alkyl or, respectively, alkylene moiety or, respectively, oxyalkyl or oxyalkylene moiety, or, respectively, mercaptoalkyl or mercaptoalkylene moiety or, respectively, aminoalkyl or aminoalkylene moiety, having from 1 to 44 C atoms, an unsubstituted or substituted saturated or unsaturated cycloalkyl or cycloalkylene moiety or, respectively, oxycycloalkyl or oxycycloalkylene moiety or, respectively, mercaptocycloalkyl or mercaptocycloalkylene moiety or, respectively, aminocycloalkyl or aminocycloalkylene moiety, having from 6 to 44 C atoms, or an unsubstituted or substituted aryl or arylene moiety having from 6 to 44 C atoms, or an ether or thioether moiety having from 1 to 20 O atoms or, respectively, S atoms, or, respectively, O and S atoms, or a polymer which has bonding by way of O, S, NH, NR⁴ or CH₂C(O) to the structural element placed within parentheses, or the moiety R³ has bonding to the moiety R¹ in such a way as to form, in total, an unsubstituted or substituted, saturated or unsaturated heterocyclic ring system having from 4 to 24 C atoms, or a mixture composed of two or more compounds of the general formula VII.

For the purposes of one preferred embodiment of the present invention, a compound based on an α,β-unsaturated β-aminocarboxylic acid, in particular a compound based on β-aminocrotonic acid, is used as compound of the general formula VII. Particularly suitable compounds here are the esters or thioesters of the corresponding aminocarboxylic acids with monohydric or polyhydric alcohols or mercaptans where R³ in the cases mentioned is always preferably an oxyalkyl moiety or mercaptoalkyl moiety.

If the moiety R³ is an alcohol moiety, or mercaptan moiety, this moiety can by way of example be formed from methanol, ethanol, propanol, isopropanol, butanol, 2-ethylhexanol, isooctanol, isononanol, decanol, lauryl alcohol, myristyl alcohol, palmityl alcohol, stearyl alcohol, ethylene glycol, propylene glycol, 1,3-butanediol, 1,4-butanediol, 1,6-hexanediol, 1,10-decanediol, diethylene glycol, thiodiethanol, trimethylolpropane, glycerol, tris(2-hydroxyethyl) isocyanurate, triethanolamine, pentaerythritol, ditrimethylolpropane, diglycerol, sorbitol, mannitol, xylitol, dipentaerythritol, or else from the corresponding mercapto derivatives of the alcohols mentioned.

For the purposes of one particularly preferred embodiment of the present invention, the compound used of the general formula VII comprises a compound in which R¹ is a linear alkyl moiety having from 1 to 4 C atoms, R² is hydrogen and R³ is a linear or branched, saturated, mono- to hexavalent alkyl or alkylene moiety having from 2 to 12 C atoms or a linear, branched or cyclic di- to hexavalent ether alcohol moiety or thioether alcohol moiety.

Suitable compounds of the general formula VII encompass, for example, stearyl β-aminocrotonate, 1,4-butanediol di(β-aminocrotonate)(BGAC), thiodiethanol β-aminocrotonate, trimethylolpropane tri-β-aminocrotonate, pentaerythritol tetra-β-aminocrotonate, dipentaerythritol hexa-β-aminocrotonate and the like. The compounds mentioned can in each case by present alone or as a mixture composed of two or more thereof in an inventive stabilizer composition.

For the purposes of the present invention, aminouracil compounds of the general formula VIII are equally suitable as compounds of the general formula VII 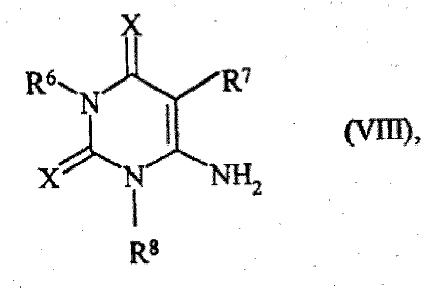 in which the moieties R⁶ and R⁷, each independently of the others, are hydrogen, or an unsubstituted or substituted linear or branched, saturated or unsaturated aliphatic alkyl moiety having from 1 to 44 C atoms, or an unsubstituted or substituted saturated or unsaturated cycloalkyl moiety having from 6 to 44 C atoms, or an unsubstituted or substituted aryl moiety having from 6 to 44 C atoms, or an unsubstituted or substituted aralkyl moiety having from 7 to 44 C atoms, or the moiety R⁶ is an unsubstituted or substituted acyl moiety having from 2 to 44 C atoms, or the moieties R⁶ and R⁷ have bonding to give an aromatic or heterocyclic system, and the moiety R⁸ is hydrogen, an unsubstituted or substituted, linear or branched, saturated or unsaturated, aliphatic hydrocarbon moiety having from 1 to 44 C atoms, an unsubstituted or substituted saturated or unsaturated cycloaliphatic hydrocarbon radical having from 6 to 44 C atoms, or an unsubstituted or substituted aromatic hydrocarbon radical having from 6 to 44 C atoms, and X is S or O. For the purposes of the present invention, aminouracil is preferred.

The compound of formula VIII is therefore one of the compounds of formula VII, where n in the general formula VII is 1 and the moieties R¹ and R³ of the general formula VII have bonding to the structural element of the general formula IX 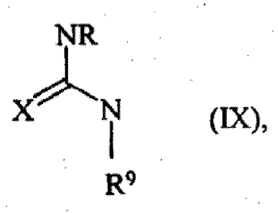 in which X is S or O. R¹ is therefore N-R⁹ in the case of a compound of the general formula VIII, while R³ is -RN-C=X and both moieties have covalent linkage related to a heterocyclic ring, by way of an N-C bond.

For the purposes of the present invention, it is preferable to use compounds of the general formula VIII in which R⁹ is methyl.

For the purposes of another preferred embodiment of the present invention, the inventive stabilizer compositions use compounds of the general formula VIII in which R⁶ and R⁸ are a linear or branched alkyl moiety having from 1 to 6 C atoms, e.g. methyl, ethyl, propyl, butyl, pentyl or hexyl, a linear or branched alkyl moiety having from 1 to 6 C atoms and substituted with OH groups, e.g. hydroxymethyl, hydroxyethyl, hydroxypropyl, hydroxybutyl, hydroxypentyl or hydroxyhexyl, an aralkyl moiety having from 7 to 9 C atoms, e.g. benzyl, phenylethyl, phenylpropyl, dimethylbenzyl or phenylisopropyl, where the aralkyl moieties mentioned can, for example, be substituted by halogen, hydroxyl or methoxy, or an alkenyl moiety having from 3 to 6 C atoms, e.g. vinyl, alkyl, methallyl, 1-butenyl or 1-hexenyl.

For the purposes of one preferred embodiment of the present invention, the inventive stabilizer compositions use compounds of the general formula VIII, in which R⁶ and R⁸ are hydrogen, methyl, ethyl, n-propyl, isopropyl, n-butyl, isobutyl, sec-butyl or tert-butyl.

Examples of compounds equally suitable as compounds of the general formula VII are those in which the moieties R¹ and R² have bonding to an aromatic or heteroaromatic system, examples being aminobenzoic acid, aminosalicylic acid, or aminopyridinecarboxylic acid and suitable derivatives thereof.

For the purposes of the present invention, examples of other suitable additives are compounds which have at least one mercapto-functional, sp²-hybridized C atom. For the purposes of the present invention, compounds which have at least one mercapto-functional, sp²-hybridized C atom are in principle any of the compounds which have a Z¹=CZ²-SH structural element or a (Z¹H, Z²)C=S structural element, where both structural elements can be tautomeric forms of a single compound. Z¹ and Z² designate substituted or unsubstituted organic radicals which in combination with the mercapto-functional, sp²-hybridized C atoms give inventive compounds which have at least one mercapto-functional, sp²-hybridized C atom. Z¹ and Z² here can, if appropriate, have bonding to one another and be part of a ring system. The sp²-hybridized C atom here can be a constituent of an unsubstituted or substituted aliphatic compound or a constituent of an aromatic system. Examples of suitable types of compound are thiocarbamic acid derivatives, thiocarbamates, thiocarboxylic acids, thiobenzoic acid derivatives, thioacetone derivatives, or thiourea, or thiourea derivatives. Suitable compounds having at least one mercapto-functional, sp²-hybridized C atom are described by way of example in the German patent application with application number 101 09 366.7.

For the purposes of one preferred embodiment of the present invention, the compound used having at least one mercapto-functional, sp²-hybridized C atom comprises thiourea or a thiourea derivative.

Examples of equally suitable additives for the inventive stabilizer compositions are carbazole or carbazole derivatives, or a mixture comprising two or more thereof.

Examples of other suitable additives are 2,4-pyrrolidinedione or its derivatives.

Examples of halogen-containing polymers are polymers of vinyl chloride, vinyl resins which contain vinyl chloride units in the main polymer chain, copolymers of vinyl chloride and of vinyl esters of aliphatic acids, in particular vinyl acetate, copolymers of vinyl chloride with esters of acrylic and methacrylic acid, or acrylonitrile, or of mixtures composed of two or more thereof, copolymers of vinyl chloride with diene compounds or with unsaturated dicarboxylic acids, or with their anhydrides, for example copolymers of vinyl chloride with diethyl maleate, diethyl fumarate, or maleic anhydride, post-chlorinated polymers and copolymers of vinyl chloride, copolymers of vinyl chloride and of vinylidene chloride with unsaturated aldehydes, with ketones, and with other compounds, such as acrolein, crotonaldehyde, vinyl methyl ketone, vinyl methyl ether, vinyl isobutyl ether, and the like, polymers and copolymers of vinylidene chloride with vinyl chloride and with the other abovementioned polymerizable compounds, polymers of vinyl chloroacetate and o dichlorodivinyl ether, chlorinated polymers of vinyl acetate, chlorinated polymeric esters of acrylic acid and of α-substituted acrylic acids, chlorinated polystyrenes, such as polydichlorostyrene, chlorinated polymers of ethylene, polymers and post-chlorinated polymers of chlorobutadiene and their copolymers with vinyl chloride, and mixtures composed of two or more of the polymers mentioned, or polymer mixtures which comprise one or more of the abovementioned polymers.

Recycled materials derived from chlorine-containing polymers can also be used according to the invention, and in principle any of the recycled materials derived from the abovementioned, halogenated polymers are suitable for this purpose. An example of a suitable material for the purposes of the present invention is recycled PVC.

For the purposes of one preferred embodiment of the present invention, an inventive polymer composition comprises an amount of from 0.1 to 20 phr, in particular from about 0.5 to about 15 phr or from about 1 to about 12 phr, of the stabilizer composition according to the present invention. The unit phr is "per hundred resin" and therefore relates to parts by weight per 100 parts by weight of polymer.

A polymer composition according to the invention preferably comprises, as a halogenated polymer, at least some content of PVC, and the PVC content here is in particular at least about 20% by weight, preferably at least about 50% by weight, for example at least about 80% by weight or at least about 90% by weight, in each case based on the entire polymer composition.

The mixing of polymers or of polymers and the stabilizer composition according to the invention can in principle take place at any desired juncture prior to or during the processing of the polymer. By way of example, the stabilizer composition can be admixed, prior to processing, with the polymer present in the form of powder or of pellets. However, it is equally possible that the stabilizer composition is added to the polymer(s) in the softened or molten state, for example during processing in an extruder, in the form of emulsion or as dispersion, as a paste-like mixture, as a dry mixture, as a solution, or as a melt.

An inventive polymer composition can be converted in a known manner to a desired form. Examples of suitable processes are calendaring, extruding, injection molding, sintering, extrusion blow molding, or the plastisol process. An inventive polymer composition can, for example, also be used for the production of foams. In principle, the inventive polymer compositions are suitable for the production of rigid PVC, in particular for the production of PVCU.

In one preferred embodiment of the invention, the rigid PVC pipe comprises, per 100.00 parts of PVC resin :
- between 5 and 50 parts of calcium carbonate,
- between 2 and 5 of a mixture of additives such as lubricants, pigment and PVC stabilizers which have been described above.
- between 0.40 and 2.00 parts of metal hydroxycarbonate.

The present invention also relates to the use of the polymer pipe according to the invention which has been described above in the evacuation of wastewater.

The manufacturing method for a polymer pipe according to the invention can comprise the following steps:
a) preparing one or more dry blends of PVC optionally with adjuvants and additives, at least one of the mixtures being a PVC composition comprising at least a metal hydroxycarbonate;
b) extruding the mixtures obtained in step a) through a die to obtain a rigid PVC pipe comprising at one or more layers.

The invention thus also relates to a process for manufacturing a polymer pipe with at least one rigid PVC-layer, comprising the steps:
a) preparing a dryblend comprising at least rigid PVC and a metal hydroxycarbonate and
b) extruding the mixture obtained in step a) through a die to obtain a halogenated polymer pipe.

During step a), an adequate number of dry blends of PVC resins according to the number of layers that will comprise the rigid PVC pipe according to the invention are prepared.

In an advantageous embodiment of the manufacturing method the dryblend of step a) comprises at least one additive chosen from PVC stabilizers, pigments, waxes, impact modifiers and processing aids.

Additives and adjuvants, and their respective amounts are chosen in a suitable manner depending on the mechanical and physical properties of rigid PVC pipe that is desired to be obtain at the outcome of the extrusion.

Of course, the choice of these additives and adjuvants is well within the reach of the person skilled in the art that will also determine the necessary amounts in view of obtaining a pipe with the desired mechanical and physical properties.

In step a) of the manufacturing process, a metal hydroxycarbonate or a mixture of two or more metal hydroxycarbonates is mixed homogeneously with the other constituents that constitute the PVC composition which is intended to form at least one of the PVC pipe layers according to the invention.

Step a) of the manufacturing process is advantageously carried out with a mixing equipment which comprises two tanks: a hot tank and a cold tank. As an alternative, some of the additives are not introduced during the mixing phase, but directly on the extrusion line during extrusion, e.g., via a side-dosing system. This can be typical for low content additives, like some lubricants or pigments. The intumescent compound or compounds may also be introduced that way. Furthermore, the blowing agent is introduced directly at the extrusion line in most of the cases.

With regard to the preparation of the dry blend for forming the PVC composition comprising a metal hydroxycarbonate, first everything can be added into the above mentioned hot tank, i.e., all the components of the dry blend, namely PVC, a metal hydroxycarbonate or a mixture of two or more metal hydroxycarbonates, and where appropriate auxiliaries and additives as described above.

In the high speed mixer, also called hot mixer, the mixture is subjected to a mechanical agitation with high speed and high shear to heat it up to 100 °C to 140 °C. The heating process is taking less than an hour, e.g. about 5 to 15 minutes. The hot mixture is then transferred to the cooling mixer, where it is still stirred but with much lower speed. In other words in the cooling mixer the dryblend is cooled.

The dry blend thus obtained can be stored, for example in a storage unit such as a silo before being conveyed to an extrusion device for carrying out step b) of extruding the process of manufacturing.

Advantageously, the PVC composition according to the invention comprises at least one PVC resin with a k-value of between 50 and 68, e.g., between 52 and 67 or between 55 and 65.

Advantageously, the rigid PVC composition according to the invention comprises further components such as at least one stabilizer or a stabilizer composition, lubricants, fillers, pigments, processing aids, etc., as known to a person skilled it in the art.

The present invention also relates to a pipe obtained by extrusion of a PVC composition as described above.

Preferably, this pipe complies with the NF EN 1453-1 standard.

Advantageously, the pipe according to the invention has a thickness of at least 3 mm.

The present invention also relates to the use of this pipe in evacuation of wastewater or blackwater.

### EXPERIMENTAL PART:

From the following recipes samples were prepared and tested with regard to their intumescent properties. Pressed plates were prepared from roll-milled sheets at 190°C. The dimensions of the plates were 50x50x2 mm.

| sample ref | 1 | 2 | 3 |
|---|---|---|---|
| S-PVC (*) | 100 | 100 | 100 |
| Zeolite | 0,65 | 0,65 | 0,65 |
| Metal soap (Ca,Zn) | 0,6 | 0,6 | 0,6 |
| Co-stabilizer | 0,1 | 0,1 | 0,1 |
| Glycerol ester | 0,3 | 0,3 | 0,3 |
| Antioxidant | 0,05 | 0,05 | 0,05 |
| Hydrocarbon wax | 0,7 | 0,7 | 0,7 |
| CaCO3 (**) | 20 | 20 | 20 |
| Zinc hydroxicarbonate (***) | | 0,5 | 1,0 |

| | | | |
|---|---|---|---|
| (*) : 257 RF from Inovyn (**) : Omyalite 90T from Omya (***) : zinc oxyde transparent from Lanxess - CAS 51839-25-9 | | | |

Test method : as described in NF 513 certification rule, France, Marque NF - sécurité feu - pipes et raccords PVC, Part 2, Revision 3, March 2017, chapter 2.1.3.

| sample ref | 1 | 2 | 3 |
|---|---|---|---|
| Average expansion ratio (%) | 1090 | 1480 | 1415 |
| relative increase (%) | - | 36% | 30% |

For sample 3 the expansion is so high that samples start to collapse. Maximum expansion is estimated at 1600% (+47%).

## Claims

1. Polymer composition comprising a halogenated polymer and a metal hydroxycarbonate with a decomposition temperature of more than 250°C as an intumescent compound.

2. Polymer composition according to claim 1, **characterized in that** the halogenated polymer is a PVC or CPVC.

3. Polymer composition according to any of the preceding claims, **characterized in that** the halogenated polymer is a rigid PVC, as defined by ASTM D883.

4. Polymer pipe comprising at least one layer of PVC, wherein the PVC-layer comprises a metal hydroxycarbonate with a decomposition temperature of more than 250°C as an intumescent compound, or a mixture of two or more thereof.

5. Polymer pipe according to claim 4, **characterized in that** it comprises an inner layer, a middle layer and an outer layer, one or more of the layers is a PVC-layer and comprises a metal hydroxy-carbonate with a decomposition temperature of more than 250°C as an intumescent compound, or a mixture of two or more thereof.

6. Polymer pipe according to claim 5, **characterized in that** the middle layer has a lower density than the inner layer or the outer layer or both.

7. Polymer pipe according to claim 5 or 6, **characterized in that** the middle layer is a foamed PVC layer.

8. Polymer pipe according to any of claims 5 to 7, **characterized in that** it comprises, for 100.00 parts by weight of PVC resin, 0.25 phr to 5.00 phr, preferably from 0.40 phr to 2.00 phr of a metal hydroxycarbonate.

9. Process for manufacturing a polymer pipe with at least one rigid PVC-layer, comprising the steps:
a) preparing a dryblend comprising at least rigid PVC and a metal hydroxycarbonate and
b) extruding the mixture obtained in step a) through a die to obtain a halogenated polymer pipe.

10. Stabilizer composition comprising an acid scavenger, a lubricant and a metal hydroxycarbonate as an intumescent compound with a decomposition temperature of more than 250°C.

11. Stabilizer composition according to claim 9 or 10, **characterized in that** the metal hydroxycarbonate is comprised in the composition in an amount of 10 to 40 % by weight.

12. Stabilizer composition according to claim 10, **characterized in that** the metal hydroxycarbonate is zinc hydroxycarbonate.
